# EUROPEAN PATENT APPLICATION

(11) **EP 4 145 657 A1**
(43) Date of publication of application: **08.03.2023**
(21) Application number: 21886484.1
(22) Date of filing: 07.07.2021
(51) Int. Cl.: H02H 7/26, H02H 3/02, G06N 7/00, G06N 3/04, G06N 3/08

(54) **PROTECTION DEVICE FOR CLOSED-LOOP POWER DISTRIBUTION SYSTEM, AND ARTIFICIAL INTELLIGENCE DEVICE**

(30) Priority: 02.11.2020 KR 20200144207
(71) Applicant: Gwangju Institute of Science and Technology, Gwangju 61005 (KR)
(72) Inventor: KIM, Yun Su, Gwangju 61005 (KR)
(74) Representative: Heilein, Ernst-Peter
(86) International application number: PCT/KR2021/008678
(87) International publication number: WO 2022/092485

(57) **Abstract**

A protection device for a closed-loop power distribution system according to the present disclosure includes: a circuit breaking mechanism configured to cut off a current; and an artificial intelligence device configured to determine the cutoff of the circuit breaking mechanism, wherein the artificial intelligence device includes: a memory configured to store data; a processor on which a learned model operates; and a learning processor configured to learn output data and input data corresponding to a short circuit and ground fault of a line in a power distribution line section between at least two protection devices and the other sections, in order to provide a learned model for the operation of any one of the protection devices.

## Description

### TECHNICAL FIELD

The present disclosure relates to a protection device for a closed-loop power distribution system, and an artificial intelligence device.

### BACKGROUND ART

A distribution system refers to electric wires and related facilities distributed from distribution substations to electricity storage facilities. The voltage of the distribution system reaches 22.9 kV. The distribution system is changing from one directional to bidirectional due to the advent of small-scale distributed power generators (gas turbines, photovoltaic power, etc.). Accordingly, the distribution system is configured as a closed loop in a conventional radial structure.

The distribution system is provided with a protection device for cutting off a distribution line in case of a fault in the distribution line. The protection device may include a circuit breaker. Cited Reference 1 discloses a conventional method for operating the protection device. According to Cited Reference 1, a communication line extending along a distribution line is provided. The protection device is provided with a control device for controlling the communication line. The communication line connects a plurality of protection devices. The communication line transmits or receives incoming/outgoing power information so that the circuit breaker operates when a fault occurs.

A considerable cost is required to provide the communication line and the control device for controlling the communication line. For example, in order to provide a communication line through optical communication, it costs 9,900 won/m. A cost of a communication modem for signal processing of the optical communication is additionally required. According to an estimate, the cost required to prepare the communication line accounts for 33.7% of the total distribution line material cost.

### DETAILED DESCRIPTION

### TECHNICAL PROBLEM

The present disclosure is proposed in the above background, and provides a protection device for a closed loop power distribution system, which is capable of protecting a power distribution system even if a communication device is not separately provided, and an artificial intelligence device.

### TECHNICAL SOLUTION

A protection device for a closed-loop power distribution system according to the present disclosure may include a circuit breaking mechanism configured to cut off a current, and an artificial intelligence device configured to determine the cutoff of the circuit breaking mechanism.

The artificial intelligence device may include a memory configured to store data.

The artificial intelligence device may include a processor on which a learned model operates.

The artificial intelligence device may include a learning processor configured to learn output data and input data corresponding to a short circuit and ground fault of a line in a power distribution line section between at least two protection devices and the other sections in order to provide a learned model for the operation of the protection device.

The input data and the output data may correspond to each other.

The processor may be provided with at least two learned models.

One of the at least two learned models may have a longer learning cycle than the other thereof.

The learned model may include a probability value adjusting unit configured to adjust a probability value determined as a fault.

The probability value adjusting unit may be provided at an output terminal of the learned model.

The input data may include at least part of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component.

The output data may include at least one of fault type information and status information.

The input data may include all of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component.

The input data may include at least one of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component, and the output data may include at least one of fault type information and status information.

The protection device may be provided with at least two protection devices spaced apart from each other on a closed-loop power distribution system connecting a substation and a customer. The at least two protection devices may be referred to as the protection device. This is because the at least two protection devices can protect the closed loop together.

At least one of the input data and the output data may be provided by a simulation.

The input data and the output data may be provided by a simulation.

At least part of the artificial intelligence device may be disposed outside the protection device for the closed-loop power distribution system.

The learned model may be disposed inside the protection device for the closed-loop power distribution system.

The input data and the output data may be simulation information correspond to each other.

An artificial intelligence device according to another aspect of the present disclosure may determine cutoff of a circuit breaking mechanism that protects a closed-loop power distribution system.

The artificial intelligence device may include a processor.

The processor may include at least two learned models having different learning cycles compared to the other thereof.

The processor may include at least two probability value adjusting units respectively provided at output terminals of the at least two learned models and configured to adjust a probability value determined as an abnormal operation.

The processor may include a summer configured to output a corresponding signal according to the abnormal operation when any one of the at least two probability value adjusting units determines the abnormal operation.

### ADVANTAGEOUS EFFECTS

According to the present disclosure, it is possible to reduce the total cost of communication facilities including communication lines.

According to the present disclosure, the reliability of energy supply is increased by preventing malfunction and non-operation of a protection device due to a failure of a communication system.

### BRIEF DESCRIPTION OF DRAWINGS

Fig. 1 illustrates an artificial intelligence (AI) device according to an embodiment of the present disclosure.
Fig. 2 illustrates an AI server according to an embodiment of the present disclosure.
Fig. 3 is a view for describing a closed-loop power distribution system.
Fig. 4 illustrates input data used for training.
Fig. 5 illustrates output data.
Fig. 6 is a view for describing an operation of a processor.

### BEST MODE FOR CARRYING OUT THE INVENTION

Hereinafter, embodiments of the present disclosure are described in detail with reference to accompanying drawings and regardless of the reference symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the present disclosure in unnecessary detail. In addition, the accompanying drawings are used to help easily understanding embodiments disclosed herein but the technical idea of the present disclosure is not limited thereto. It will be understood that the present disclosure includes all modifications, equivalents, and substitutes falling within the spirit and scope of various embodiments of the disclosure.

It will be understood that although the terms "first," "second" etc. may be used herein to describe various elements, these elements should not be limited by these terms. These terms are only used to distinguish one element from another.

It will be understood that when an element is "connected" or "coupled" to another element, the element may be directly connected or coupled to the other element or may be "connected" or coupled" to the other element with an intervening element therebetween. On the other hand, it will be understood when an element is "directly connected" or "directly coupled" to another element, no intervening element is present therebetween.

### <Artificial Intelligence (AI)>

AI refers to the field of research on artificial intelligence or methodologies that can create the artificial intelligence, and machine learning refers to the field that defines various problems dealt with in the field of AI and studies methodologies to solve them. Machine learning is also defined as an algorithm that improves the performance of a certain task through constant experience.

An artificial neural network (ANN) is a model used in machine learning, and may refer to an overall model having problem-solving ability, which includes artificial neurons (nodes) that form a network by combining synapses. The ANN may be defined by a connection pattern between neurons of different layers, a learning process of updating model parameters, and an activation function of generating an output value.

The ANN may include an input layer, an output layer, and optionally one or more hidden layers. Each layer includes one or more neurons, and the ANN may include neurons and synapses connecting neurons. In the ANN, each neuron may output a function value of an activation function for input signals, weights, and biases, which are input through synapses.

The model parameters refer to parameters determined through learning, and include the weights of synaptic connections and the biases of neurons. Hyperparameter refers to a parameter that must be set before learning in a machine learning algorithm, and includes a learning rate, number of iterations, mini-batch size, initialization function, and the like.

The purpose of learning of the ANN may be to determine a model parameter that minimizes a loss function. The loss function may be used as an index for determining optimal model parameters in the learning process of the ANN.

Machine learning can be classified into supervised learning, unsupervised learning, and reinforcement learning according to a learning method.

Supervised learning refers to a method of learning an artificial neural network in a state where labels are given for training data. The label may refer to a correct answer (or a result value) that the artificial neural network should infer when the training data is input to the artificial neural network. Unsupervised learning may refer to a method of learning an artificial neural network in a state where no labels are given for training data. Reinforcement learning may refer to a learning method in which an agent defined in a certain environment learns to select an action or sequence of actions that maximizes the cumulative reward in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

The present disclosure applies an artificial intelligence device based on the above concept.

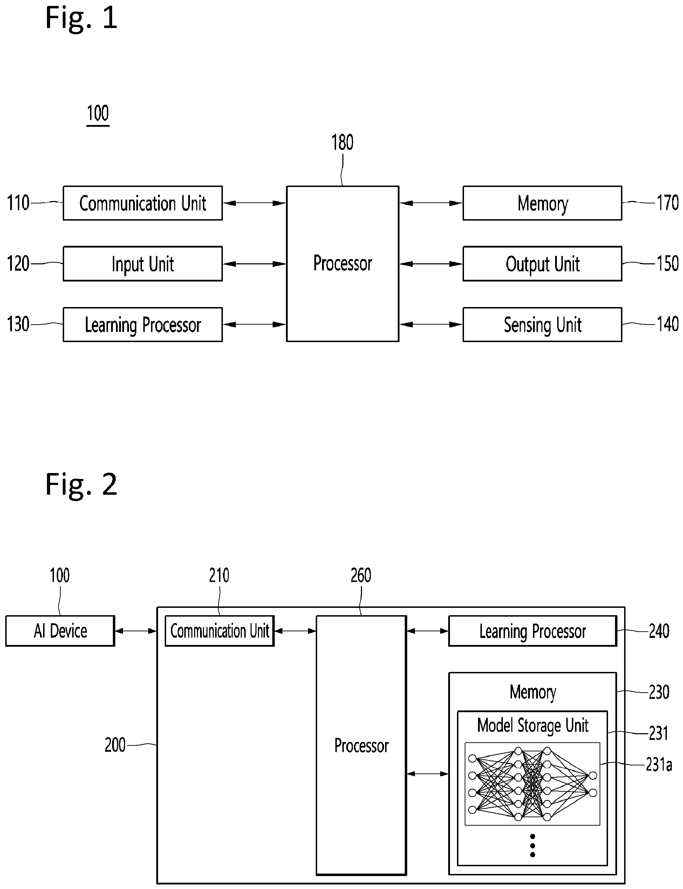

Fig. 1 illustrates an AI device 100 according to an embodiment of the present disclosure.

The AI device 100 may be implemented as stationary devices or mobile devices, such as TVs, projectors, mobile phones, smartphones, desktop computers, laptops, digital broadcasting terminals, personal digital assistants (PDAs), portable multimedia players (PMPs), navigation devices, tablet PCs, wearable devices, set-top boxes (STBs), DMB receivers, radios, washing machines, refrigerators, desktop computers, digital signages, robots, and vehicles.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices, such as another AI device or AI server 200, by using wired/wireless communication technology. For example, the communication unit 110 may transmit and receive sensor information, a user input, a learning model, a control signal, and the like to and from the external devices. However, the communication unit 110 does not act as a means for directly connecting a protection device 300.

In this case, the communication technology used by the communication unit 110 may include Global System for Mobile communication (GSM), Code Division Multi Access (CDMA), Long Term Evolution (LTE), 5G, Wireless LAN (WLAN), Wireless-Fidelity (Wi-Fi), Bluetooth^{™}, Radio Frequency Identification (RFID), Infrared Data Association (IrDA), ZigBee, Near Field Communication (NFC), and the like.

The input unit 120 may acquire various types of data.

At this time, the input unit 120 may include a camera for inputting a video signal, a microphone for receiving an audio signal, and a user input unit for receiving information from a user. The camera or the microphone may be treated as a sensor, and a signal acquired from the camera or the microphone may be referred to as sensing data or sensor information.

The input unit 120 may acquire training data for model learning, input data to be used to acquire an output using the learning model, and the like. The input unit 120 may acquire raw input data. In this case, the processor 180 or the learning processor 130 may extract an input feature by preprocessing the input data.

The learning processor 130 may learn a model composed of an artificial neural network by using training data. The learned artificial neural network may be referred to as a learning model. The learning model may be used to infer a result value for new input data rather than learning data, and the inferred value may be used as a basis for determination to perform a certain operation.

At this time, the learning processor 130 may perform AI processing together with the learning processor 240 of the AI server 200.

At this time, the learning processor 130 may include a memory that is integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, or user information by using various sensors.

In this case, examples of the sensors included in the sensing unit 140 may include a current sensor, a voltage sensor, a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to sight, hearing, or touch. At this time, the output unit 150 may include a display for outputting sight information, a speaker for outputting auditory information, and a haptic module for outputting haptic information. The output unit 150 may generate a control signal. The control signal may be a signal for controlling the operation of hardware.

The memory 170 may store data that supports various functions of the AI device 100. For example, the memory 170 may store input data, training data, a learning model, a learning history, and the like, which are acquired from the input unit 120.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intent information for the user input and may determine the user's requirements based on the acquired intent information.

The processor 180 may collect history information including the operation contents of the AI device 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in memory 170. Furthermore, the processor 180 may operate two or more of the components included in the AI device 100 in combination so as to drive the application program.

Fig. 2 illustrates an AI server 200 according to an embodiment of the present disclosure.

Referring to Fig. 2, the AI server 200 may refer to a device that learns an ANN by using a machine learning algorithm or uses a learned ANN. The AI server 200 may include a plurality of servers to perform distributed processing, or may be defined as a 5G network. At this time, the AI server 200 may be included as a partial configuration of the AI device 100, and may perform at least part of the AI processing together.

The AI server 200 may include a communication unit 210, a memory 230, a learning processor 240, and a processor 260.

The communication unit 210 may transmit or receive data to or from an external device such as the AI device 100.

The memory 230 can include a model storage unit 231. The model storage unit 231 may store a learning or learned model (or an ANN 231a) through the learning processor 240.

The learning processor 240 may learn the ANN 231b by using the training data. The learning model may be used in a state of being mounted on the AI server 200 of the ANN, or may be used in a state of being mounted on an external device such as the AI device 100.

The learning model may be implemented in hardware, software, or a combination of hardware and software. When all or part of the learning model is implemented as software, one or more instructions constituting the learning model may be stored in the memory 230.

The processor 260 may infer a result value for new input data by using the learning model and generate a response or a control command based on the inferred result value.

For the configuration of the protection device 300 for the closed-loop power distribution system described below, some functions of the AI device 100 and the AI server 200 may be omitted. Some functions of the AI device 100 and the AI server 200 may be combined into a single functional block.

The protection device 300 for the closed-loop power distribution system may include the configuration of the AI device 100 described with reference to Fig. 1 or 2. The protection device 300 may perform the function of the AI device 100. The protection device 300 for the closed-loop power distribution system may include the configuration of the AI server 200 and perform the function of the AI server 200. The protection device 300 for the closed-loop power distribution system may include each component of the AI device 100 and the AI server 200, and may be operated by the cooperation of the two devices 100 and 200.

A case where the protection device 300 for the closed-loop power distribution system is performed by the AI device 100 will be described below.

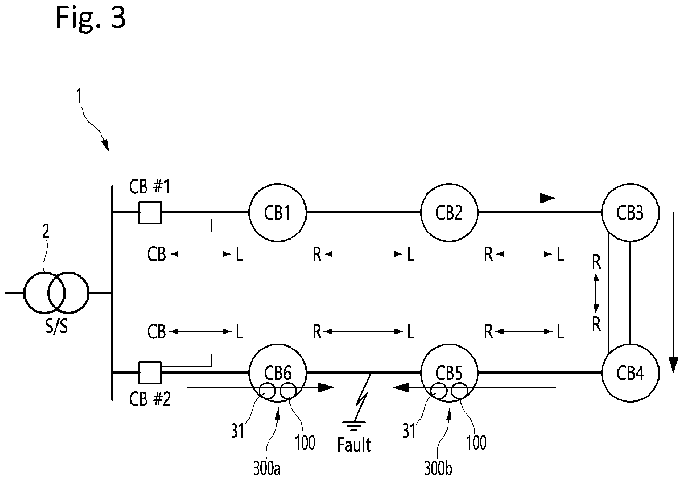

Fig. 3 is a view for describing a closed-loop power distribution system.

Referring to Fig. 3, a substation 2 may connect at least two (six in the drawing) closed-loop distribution system protection devices 300 through a closed loop 1. The closed loop may provide a power distribution system. A consumer may be placed in the vicinity of the protection device 300. 300a and 300b may exemplify the protection device.

The protection device 300 for the closed-loop power distribution system may include the AI device 100. The protection device 300 for the closed-loop power distribution system may include various circuit breaking mechanisms 31 such as a circuit breaker and a recloser. The circuit breaking mechanism may serve to cut off a current flow. A current flow between a pair of adjacent protection devices 300a and 300b may be cut off by the circuit breaking mechanism 31. The circuit breaking mechanism 31 may protect the closed-loop power distribution system except for a place where a fault occurs.

A learned model may be stored in the AI device 100. Input data and output data used for training the learned model will be described.

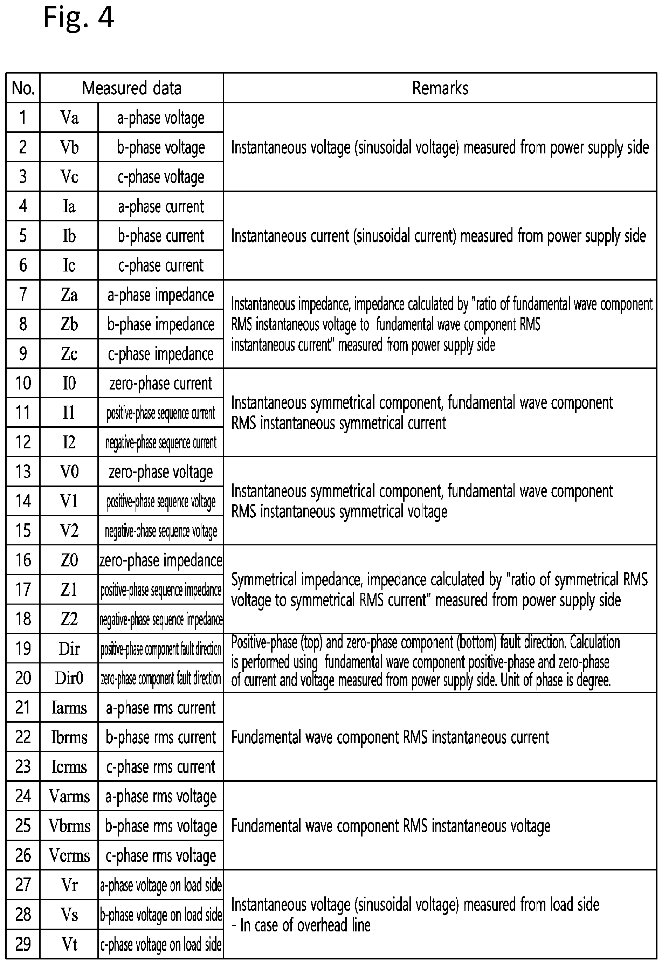

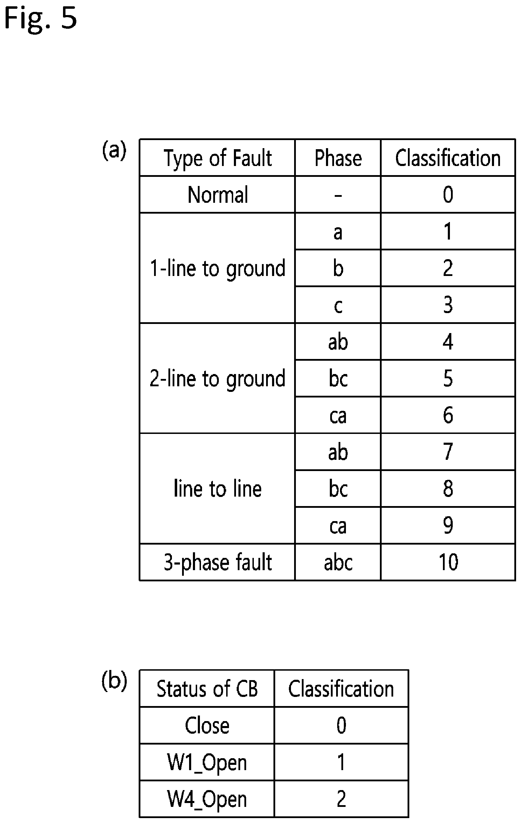

Fig. 4 illustrates input data used for training, and Fig. 5 illustrates output data.

First, referring to Fig. 4, each information about three phases may be used as input data. Specifically, a current/voltage, a symmetrical impedance, a fault direction, a fundamental wave component RMS instantaneous current, a fundamental wave component RMS instantaneous voltage, and an instantaneous voltage measured from the load side may be used as an instantaneous voltage measured from the power supply side, an instantaneous current measured from the power supply side, an instantaneous impedance, and an instantaneous symmetric component. Information selected from among the pieces of information described above may be used for training.

Referring to Fig. 5, output data corresponding to the input data may include fault type information 5(a) and status information 5(b). The type information may be information indicating what the fault is, and the status information may be information indicating to which status the circuit breaking mechanism 31 is set.

The fault type information may include a case where the three phase are normal, a case where a line of one of the three phases is grounded, a case where lines of two of the three phases are grounded, a case where lines of two of the three phases are short-circuited, and a case where the three phases are all grounded. In the status information, the operation of the circuit breaking mechanism 31 may be determined. Normal (close) may mean that it is closed, and abnormal (open) may mean that it is cut off. In the case of an overhead line, one circuit breaking mechanism may be provided in one protection device.

In the case of an underground line, at least two circuit breaking mechanisms may be provided in one protection device. In the case of the underground line, the at least two circuit breaking mechanisms 31 may be provided in series based on the current flow. In this case, the circuit breaking mechanism adjacent to the side where the fault has occurred may be operated. In Fig. 5(a), when four circuit breaking mechanisms 31 are provided, W1_open and W4_{_}open may identify the case of operating a first braking mechanism and the case of operating a fourth circuit breaking mechanism.

Training data including the input data and the output data may be learned using a long short term memory (LSTM) technique. The LSTM technique may be performed by all or part of the learning processors 130 and 240 or in cooperation therewith.

After the fault type information (Fig. 5(a)) is learned, the status information (Fig. 5(b)) may be learned. This learning may be referred to as serial learning. The fault type information (Fig. 5(a)) and the status information (Fig. 5(b)) may be learned together. This learning may be referred to as parallel learning. Both the serial learning and the parallel learning may be applied to learning.

The learning may be performed uniquely to a power distribution system serving as a model. A closed-loop power distribution system provided with six protection devices 300 (first to sixth protection devices) is taken as an example. When learning the learning model of the first protection device, a case where a fault occurs in a line between at least one pair of protection devices among the first to sixth protection devices may be learned. Here, the line of the protection device may include a power distribution line. The line of the protection device may include a case where the line is short-circuited or grounded in a section other than the power distribution line. The same applies to the description provided below.

When learning the learning model of the second protection device, a case where a fault occurs in a line between at least one pair of protection devices among the first to sixth protection devices may be learned. Here, at least one may include a subset. The same applies to other cases.

Of course, when providing the learning model of each protection device, a case where a fault does not occur has to be learned. As such, the learned model suitable for all protection devices may use the input data and the output data corresponding to the fault of at least one of the lines between all protection devices including itself. According to the above learning, different learned models may be mounted on the AI device 100 for each protection device. Furthermore, when the power distribution system is changed, another learned model may be mounted on the AI device 100.

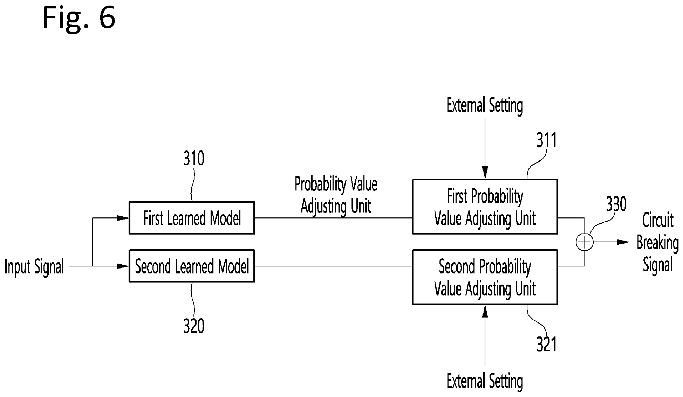

Fig. 6 is a view for describing the operation of the processor.

The processor may include at least two of the learned models. Compared to the first learned model 310, the second learned model 320 may have a longer learning cycle. For example, when learning the first learned model 310, the input data and the output data may be learned by using 269 samples for 4.02 cycles (0.06725 sec in case of 60 Hz). When learning the second learned model 320, the input data and the output data may be learned by using 537 samples for 8.04 cycles (0.1345 sec in case of 60 Hz).

On the other hand, the learned models 310 and 320 may be stored in the memory 170. The processor 180 may upload the learning model.

The first learned model 310 obtains features by referring to a shorter time than the second learned model 320. Accordingly, according to the first learned model 310, the protection device 300 may operate quickly. Since the protection device 300 operates quickly, it is possible to quickly block the propagation of adverse effects due to the fault when the fault occurs.

The second learned model 320 obtains features by referring to a longer time than the first learned model 310, and may be more accurate. Accordingly, it is possible to more accurately detect a fault that the first learned model 310 has not identified. A summer 330 may be provided in the protection device 300 to operate together with the first and second learned models 310 and 320. According to the summer 330, a circuit breaking signal may be generated even if a fault signal is generated from either side. The circuit breaker 31 may operate in response to the circuit breaking signal.

Probability value adjusting units 311 and 321 may be provided at output terminals of the learned models 310 and 320, respectively. The probability value adjusting units 311 and 312 may provide a probability value for determining a fault or a normal condition by using a value output as a probability from the learned models 310 and 320. For example, the probability values of the probability value adjusting units 311 and 312 may be adjusted to 50%. In this case, when 49% is output from the learned models 310 and 320, it may be determined as normal, and when 51% is output, it may be determined as a fault.

The probability value adjusting unit may be adjusted from an external factor including a user. When it is desired to safely protect the protection system for the closed loop, the probability value may be set to be low. When the number of the learned models is three or more, the number of probability value adjusting units may also increase. In this case, the power distribution system may be more safely protected.

### INDUSTRIAL APPLICABILITY

According to the present disclosure, it is possible to operate a protection device for a closed-loop power distribution system without providing a communication line. Accordingly, it is possible to remarkably reduce the cost of installing the closed-loop power distribution system.

On the other hand, since the input data and the output data may be provided by simulation, there is no problem of an increase in delivery time and an increase in cost, which separately occur for the implementation of artificial intelligence.

## Claims

1. A protection device for a closed-loop power distribution system, the protection device comprising:
a circuit breaking mechanism configured to cut off a current; and
an artificial intelligence device configured to determine the cutoff of the circuit breaking mechanism,
wherein the artificial intelligence device comprises:
a memory configured to store data;
a processor on which a learned model operates; and
a learning processor configured to learn input data corresponding to a short circuit and ground fault of a line in a power distribution line section between at least two protection devices and the other sections, and output data corresponding to the input data in order to provide a learned model for the operation of the protection device.

2. The protection device of claim 1, wherein the processor is provided with at least two learned models.

3. The protection device of claim 1, wherein one of the at least two learned models has a longer learning cycle than the other thereof.

4. The protection device of claim 1, wherein the learned model comprises a probability value adjusting unit configured to adjust a probability value determined as a fault.

5. The protection device of claim 4, wherein the probability value adjusting unit is provided at an output terminal of the learned model.

6. The protection device of claim 1, wherein the input data comprises at least part of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component.

7. The protection device of claim 1, wherein the output data comprises fault type information and status information.

8. The protection device of claim 1, wherein the input data comprises all of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component.

9. The protection device of claim 1, wherein the input data comprises at least one of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component, and
wherein the output data comprises at least one of fault type information and status information.

10. The protection device of claim 1, wherein the protection device is provided with at least two protection devices spaced apart from each other on a closed-loop power distribution system connecting a substation and a customer.

11. The protection device of claim 1, wherein at least one of the input data and the output data is provided by a simulation.

12. The protection device of claim 1, wherein the input data and the output data are provided by a simulation.

13. The protection device of claim 1, wherein at least part of the artificial intelligence device is disposed outside the protection device for the closed-loop power distribution system.

14. The protection device of claim 1, wherein the learned model is disposed inside the protection device for the closed-loop power distribution system.

15. An artificial intelligence device for determining cutoff of a circuit breaking mechanism that protects a closed-loop power distribution system, the artificial intelligence device comprising:
a memory configured to store data; and
a processor comprising:
- at least two learned models having different learning cycles compared to the other thereof;
- at least two probability value adjusting units respectively provided at output terminals of the at least two learned models and configured to adjust a probability value determined as an abnormal operation; and
- a summer configured to output a corresponding signal according to the abnormal operation when any one of the at least two probability value adjusting units determines the abnormal operation.

16. A protection device for a closed-loop power distribution system, the protection device being provided with at least two protection devices spaced apart from each other on a closed-loop power distribution system connecting a substation and a customer, the protection device comprising:
a circuit breaking mechanism configured to cut off a current; and
an artificial intelligence device configured to determine the cutoff of the circuit breaking mechanism,
wherein the artificial intelligence device comprises:
a memory configured to store data;
a processor on which a learned model operates; and
a learning processor configured to learn output data and input data corresponding to a short circuit and ground fault of a line in a power distribution line section between the at least two protection devices and the other sections in order to provide a learned model for the operation of any one of the protection devices.

17. The protection device of claim 16, wherein the input data comprises at least part of a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component.

18. The protection device of claim 16, wherein the output data comprises at least one of fault type information and status information.

19. The protection device of claim 16, wherein the input data comprises a current/voltage, a symmetrical impedance, a fault direction, a fundamental wave component RMS instantaneous current, a fundamental wave component RMS instantaneous voltage, and an instantaneous voltage measured from a load side as an instantaneous voltage measured from a power supply side, an instantaneous current measured from the power supply side, an instantaneous impedance, and an instantaneous symmetric component, and
wherein the output data comprises fault type information and status information.

20. The protection device of claim 16, wherein the input data and the output data are simulation information corresponding to each other.
